# EUROPEAN PATENT SPECIFICATION

(11) **EP 3 444 537 B1**
(45) Date of publication and mention of the grant of the patent: **03.03.2021**
(21) Application number: 16898558.8
(22) Date of filing: 11.04.2016
(51) Int. Cl.: F24H 9/00, F24D 17/02, F24H 4/04, F24H 1/18, F24D 3/10, F28D 20/00

(54) **HEAT STORAGE DEVICE**
WÄRMESPEICHERVORRICHTUNG
DISPOSITIF DE STOCKAGE DE CHALEUR

(43) Date of publication of application: 20.02.2019
(73) Proprietor: Mitsubishi Electric Corporation, Chiyoda-ku Tokyo 100-8310 (JP)
(72) Inventor: KOYAMA, Yuka, Tokyo 100-8310 (JP); OGAWARA, Masayoshi, Tokyo 100-8310 (JP); SADAHIRO, Yosuke, Tokyo 100-8310 (JP)
(74) Representative: Pfenning, Meinig & Partner mbB
(86) International application number: PCT/JP2016/061693
(87) International publication number: WO 2017/179098

(56) References cited:
- EP-A1- 1 528 329
- EP-A1- 1 884 720
- WO-A1-2015/136891
- CA-A1- 2 434 379
- JP-A- 2001 124 417
- JP-A- 2008 020 103
- JP-A- 2008 128 508
- JP-A- 2010 255 964
- JP-A- 2012 107 843
- JP-A- 2012 107 843
- JP-U- H0 579 313

## Description

### [Technical Field]

The present invention relates to a heat storage device.

### [Background Art]

A hot water tank structure disclosed in PTL 1 described below has the following configuration. A circulation pipeline (R) is formed from an inlet pipeline (10) extending from a hot water supplying outlet (11) to an inlet (4a) of a hot water tank (4), an outlet pipeline (17) extending from an outlet (4b) of the hot water tank (4) to a hot water outlet (18), and a bypass passage (19) connecting the hot water supplying outlet (11) to the hot water outlet (18). A check valve (15) is provided in the inlet pipeline (10) in the forward direction.

JP 2012 107 843 A provides a water heater which can be continuously used even if high hardness water is used as supply water. To this end, the water heater includes a tank for storing a heating medium, a heating means for heating the heating medium, a heating circuit for water supply which takes out the heating medium of the tank and returns the heating medium to the tank, a heat exchanger for hot water supply which is disposed in the heating circuit for hot water supply, performs the heat exchange of supply water with the heating medium and heats the supply water to produce supply hot water, a water supply circuit for supplying the supply water to the heating circuit for hot water supply, as well as hot water supply circuit for supplying at the supply hot water heated by the heat exchanger for hot water supply to hot water supply terminals, and finally a heating medium introducing circuit which is branched from the water supply circuit and introduces the supply water into the tank as the heating medium. The heat exchanger for hot water supply is connected by joints to pipes of the heating circuit for hot water supply, with the pipe of the hot water supply circuit and the pipes of pre-hot water supply circuit so as to be detachable.

JP 2010 255 964 A provides a cleaning method to remove scale on a water heat exchanger. EP 1 528 329 A1 and EP 1 884 720 A1 both provide units for heating systems. CA 2 434 379 A1 discloses a heat exchanger for use with a catalytic heater.

### [Citation List]

### [Patent Literature]

[PTL 1] Japanese Patent Application Publication No. 2001-124417

### [Summary of Invention]

### [Technical Problem]

In the feature of PTL 1, hot water from the outside flows into the hot water supplying outlet (11), and hot water in the hot water tank (4) is supplied to the outside from the hot water outlet (18). That is, the circulation pipeline (R) described in PTL 1 is an open system. A pump is not installed in the circulation pipeline (R).

There is a heat storage device that circulates a liquid heating medium stored in a heat storage tank in a closed circuit with use of a pump. In such a heat storage device having a closed system, an operation of injecting the heating medium into the closed circuit from the outside and filling the closed circuit with the heating medium is needed only at the beginning of the operation of the heat storage device. When the pump operates while there is still air in the closed circuit, there is a fear that the heating medium does not circulate smoothly or the pump receives damage.

The present invention has been made in order to solve the problems as described above, and an object thereof is to provide a heat storage device capable of efficiently removing air in a closed circuit when an operation of filling the closed circuit with a heating medium is performed.

### [Solution to Problem]

A heat storage device according to the present invention includes: a heat storage tank having an inlet and an outlet, and configured to store a liquid heating medium; a check valve having an inlet and an outlet; a first flow path configured to connect the outlet of the heat storage tank to the inlet of the check valve; a second flow path configured to connect the outlet of the check valve to the inlet of the heat storage tank; a pump provided in the first flow path and configured to transfer the heating medium; and a filler port provided in the first flow path. When a closed circuit including the heat storage tank, the check valve, the first flow path, the second flow path, and the pump is filled with the heating medium, the heating medium supplied from an external supply source is injected into the first flow path through the filler port.

### [Advantageous Effects of Invention]

According to the heat storage device of the present invention, the air in the closed circuit can be efficiently removed when the operation of filling the closed circuit with the heating medium is performed.

### [Brief Description of Drawings]

Fig. 1 is a view illustrating a heat storage device of a first embodiment.
Fig. 2 is a view illustrating the heat storage device of the first embodiment.
Fig. 3 is a view illustrating a heat storage device of a second embodiment.
Fig. 4 is a view illustrating a heat storage device of a third embodiment.
Fig. 5 is a view illustrating a heat storage device of a fourth embodiment.
Fig. 6 is a view illustrating a heat storage device of a fifth embodiment.
Fig. 7 is a view illustrating a heat storage device of a sixth embodiment.

### [Description of Embodiments]

Embodiments are described below with reference to the drawings. Common elements in the drawings are denoted by the same symbols, and overlapping descriptions are simplified or omitted. This disclosure may include all the combinations of the combinable configurations out of the configurations to be described in the embodiments below.

### First Embodiment.

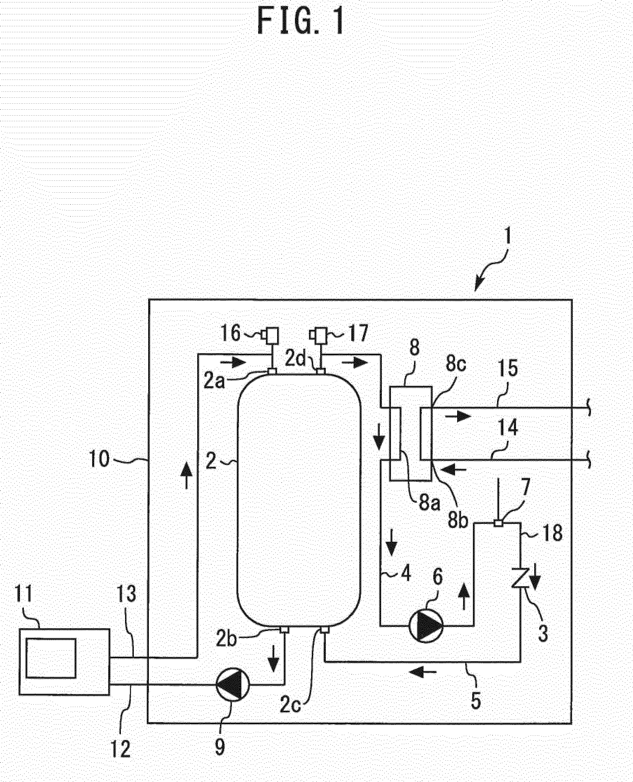

Fig. 1 is a view illustrating a heat storage device of a first embodiment. As illustrated in Fig. 1, a heat storage device 1 of the first embodiment includes a housing 10. The heat storage device 1 further includes a heat storage tank 2, a check valve 3, a first flow path 4, a second flow path 5, a pump 6, a filler port 7, a heat exchanger 8, and a pump 9 accommodated in the housing 10.

The heat storage device 1 further includes a heat pump device 11. In the example illustrated in Fig. 1, the heat pump device 11 is installed outside the housing 10. The heat pump device 11 may be installed in the housing 10. The heat pump device 11 is an example of heating means for heating a liquid heating medium. The heating medium may be water. The heating medium may be brine other than water such as calcium chloride solution, ethylene glycol solution, and alcohol.

Although not shown, the heat pump device 11 includes a refrigerant circuit. The refrigerant circuit may include a compressor that compresses a refrigerant, a heat exchanger that exchanges heat between the high-pressure and high-temperature refrigerant compressed by the compressor and the heating medium, a decompression device that decompresses the refrigerant, and an evaporator that evaporates the refrigerant.

The heating means for heating the heating medium is not limited to the heat pump device 11. The heating means may be one of an electric heater, a solar thermal collector, and a fuel burning heater. A plurality of heating means may be included.

The heat storage tank 2 stores the heating medium. When the heat storage device 1 is in operation, the heat storage tank 2 is maintained to be in a state filled with the heating medium. Thermal stratification in which the temperature of the upper side is high and the temperature of the lower side is low can be formed in the heat storage tank 2 due to the density difference in the heating medium depending on temperature difference.

The heat storage tank 2 includes an inlet 2a, an outlet 2b, an inlet 2c, and an outlet 2d. The inlet 2a and the outlet 2d are provided in the upper portion of the heat storage tank 2. In the example illustrated in Fig. 1, the inlet 2a and the outlet 2d are provided in the uppermost portion of the heat storage tank 2. The outlet 2b and the inlet 2c are provided in the lower portion of the heat storage tank 2. In the example illustrated in Fig. 1, the outlet 2b and the inlet 2c are provided in the lowermost portion of the heat storage tank 2. A pipe 12 connects the outlet 2b in the lower portion of the heat storage tank 2 to an inlet of the heat pump device 11. The pump 9 that transfers the heating medium is installed in the middle of the pipe 12. A pipe 13 connects an outlet of the heat pump device 11 to the inlet 2a in the upper portion of the heat storage tank 2.

The heat storage device 1 can perform heat accumulating operation. The heat accumulating operation is an operation of accumulating a high-temperature heating medium in the heat storage tank 2. The heat accumulating operation is performed as follows. The pump 9 and the heat pump device 11 are operated. A low-temperature heating medium in the heat storage tank 2 exits the outlet 2b and is sent to the heat pump device 11 through the pipe 12. The heating medium of which temperature has increased by being heated in the heat pump device 11 returns to the heat storage tank 2 through the pipe 13. The high-temperature heating medium flows into the heat storage tank 2 from the inlet 2a. The high-temperature heating medium gradually accumulates in the heat storage tank 2 from the top to the bottom thereof.

The circuit in which the heating medium circulates in the heat accumulating operation is a closed circuit. That is, the circuit including the heat storage tank 2, the pump 9, the heat pump device 11, the pipe 12, and the pipe 13 is a closed circuit. The expression "closed circuit" herein means a closed system into or out of which a substance, that is, a heating medium does not enter or exit the outside of the system.

The first flow path 4 connects the outlet 2d in the upper portion of the heat storage tank 2 to an inlet of the check valve 3. The second flow path 5 connects an outlet of the check valve 3 to the inlet 2c in the lower portion of the heat storage tank 2. The pump 6 transfers the heating medium. The pump 6 is provided in the first flow path 4. The filler port 7 is provided in the first flow path 4.

The heat exchanger 8 exchanges heat between the heating medium supplied from the heat storage tank 2 and water supplied from the outside. A flow path 8a of the heating medium included in the heat exchanger 8 forms a part of the first flow path 4. The flow path of the water included in the heat exchanger 8 includes a first end 8b connected a water supply pipe 14 and a second end 8c connected to a hot water supply pipe 15. The pump 6 is downstream of the heat exchanger 8 in the first flow path 4. The filler port 7 is downstream of the pump 6.

The heat storage device 1 can perform hot water supply operation. The hot water supply operation is performed as following. The pump 6 is operated. The heating medium flows through the first flow path 4 and the second flow path 5. Water flows from an external water source into the heat exchanger 8 through the water supply pipe 14. The high-temperature heating medium exiting the outlet 2d in the upper portion of the heat storage tank 2 flows into the heat exchanger 8. The heating medium heats the water in the heat exchanger 8. The hot water of which temperature has increased by being heated in the heat exchanger 8 is supplied to an external terminal through the hot water supply pipe 15. The heating medium of which temperature has decreased by being cooled in the heat exchanger 8 returns to the heat storage tank 2 via the pump 6, the check valve 3, and the second flow path 5. The heating medium flows into the heat storage tank 2 from the inlet 2c.

The circuit in which the heating medium circulates in the hot water supply operation is a closed circuit. That is, the circuit including the heat storage tank 2, the check valve 3, the first flow path 4, the second flow path 5, and the pump 6 is a closed circuit. The expression "closed circuit" herein means a closed system into or out of which a substance, that is, a heating medium does not enter or exit the outside of the system.

An air vent valve 16 is connected to the uppermost portion of the pipe 13. An air vent valve 17 is connected to the uppermost portion of the first flow path 4. The air vent valves 16 and 17 are examples of air removing means for removing air in the closed circuit. The air vent valves 16 and 17 may be automatic air vent valves including floats. The air vent valves 16 and 17 may also have a function of adjusting pressure in the closed circuit. Air removing means may be connected to the uppermost portion of the heat storage tank 2.

There may be a case where the pump 6 is removed from the first flow path 4 in order to maintain the pump 6. In a case without the check valve 3, when the pump 6 is removed, the heating medium in the heat storage tank 2 flows backward in the second flow path 5 due to hydraulic head pressure and starts to leak from the place in which the pump 6 used to be connected. Meanwhile, in this embodiment, the following effect can be obtained by including the check valve 3. The heating medium in the heat storage tank 2 can be automatically prevented from flowing backward in the second flow path 5 when the pump 6 is removed.

The heat storage device 1 of this embodiment includes an inverted U-shaped flow path 18. The inverted U-shaped flow path 18 is provided for the purpose of efficiently accommodating devices in the small space in the housing 10 in order to miniaturize the heat storage device 1. The inverted U-shaped flow path 18 is provided in order to step over other devices (not shown). The filler port 7 is provided in the upper portion of the inverted U-shaped flow path 18.

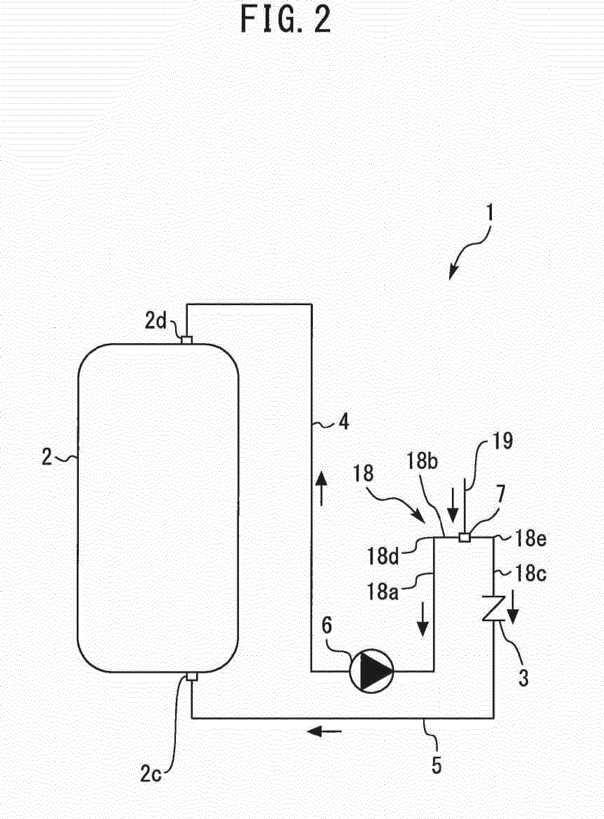

Fig. 2 is a view illustrating the heat storage device 1 of the first embodiment. Fig. 2 is a view omitting the illustration of some devices included in the heat storage device 1 illustrated in Fig. 1. As illustrated in Fig. 2, the inverted U-shaped flow path 18 includes a first vertical portion 18a, a top portion 18b, a second vertical portion 18c, a first bend portion 18d, and a second bend portion 18e. The first vertical portion 18a and the second vertical portion 18c extend along the vertical direction. The top portion 18b extends along the horizontal direction. The first bend portion 18d is a bend portion between the upper end of the first vertical portion 18a and one end of the top portion 18b. The second bend portion 18e is a bend portion between the upper end of the second vertical portion 18c and the other end of the top portion 18b. The filler port 7 is provided in the top portion 18b. The top portion 18b corresponds to the uppermost portion of the inverted U-shaped flow path 18.

In this embodiment, the first vertical portion 18a, the top portion 18b, the first bend portion 18d, and the second bend portion 18e of the inverted U-shaped flow path 18 belongs to the first flow path 4. A part of the second vertical portion 18c belongs to the first flow path 4. The rest of the second vertical portion 18c belongs to the second flow path 5. The check valve 3 is provided in the second vertical portion 18c. Not limited to the configuration as above, all of the inverted U-shaped flow path 18 may belong to the first flow path 4.

An operation of filling the closed circuit in the heat storage device 1 with heating medium is performed when the operation of the heat storage device 1 is started for the first time. The operation is hereinafter referred to as "filling operation". In the filling operation, it is important to prevent air from remaining in the closed circuit. When the pump 6 is operated in a state in which air remains in the closed circuit, there is a fear that the heating medium does not circulate smoothly or the pump 6 receives damage.

The filling operation is described below. The direction in which the heating medium flows in the filling operation is indicated by the arrows in Fig. 2. The filling operation is performed as the following. An external supply source is connected to a filler tube 19 communicating with the filler port 7. A heating medium supplied from the supply source is injected into the first flow path 4 through the filler tube 19 and the filler port 7. The injected heating medium can flow into the heat storage tank 2 from the inlet 2c in the lower portion of the heat storage tank 2 through the check valve 3 and the second flow path 5. As a result, the heating medium is accumulated in the heat storage tank 2. The injected heating medium can also flow in the direction toward the pump 6 and the outlet 2d in the upper portion of the heat storage tank 2 from the filler port 7 through the first flow path 4. As a result, the first flow path 4 and the pump 6 can also be filled with the heating medium without causing air to remain therein. The air in the closed circuit is discharged to the outside of the system through the air vent valves 16 and 17. The pipe 12, the pump 9, the heat pump device 11, and the pipe 13 are also filled with the heating medium because the heating medium in the heat storage tank 2 flows into the pipe 12 from the outlet 2b.

If the filler port 7 is provided in the second flow path 5, the following result is obtained. The injected heating medium cannot flow into the first flow path 4 due to the check valve 3. As a result, air tends to remain in the first flow path 4 and the pump 6. That is, the air in the closed circuit cannot be efficiently removed. Meanwhile, in this embodiment, the filler port 7 is provided in the first flow path 4, and hence the air in the closed circuit can be efficiently removed.

In general, when there is an inverted U-shaped flow path, the air in the upper portion of the inverted U-shaped flow path is not easily removed. In general, an air vent valve for removing air is connected to the upper portion of the inverted U-shaped flow path in many cases. Meanwhile, in this embodiment, the following effect can be obtained by directly injecting the heating medium into the upper portion of the inverted U-shaped flow path 18 from the filler port 7. The air in the inverted U-shaped flow path 18 can be efficiently removed even without connecting an air vent valve to the upper portion of the inverted U-shaped flow path 18. In particular, in this embodiment, the air in the inverted U-shaped flow path 18 can be removed more efficiently by providing the filler port 7 in the uppermost portion of the inverted U-shaped flow path 18.

After the filling operation has completed, sealing is performed so that the heating medium does not leak from the filler port 7. The filler port 7 may include a valve (not shown) that automatically closes. The opening of the filler tube 19 may be closed instead of closing the filler port 7. The filler tube 19 may include a valve (not shown).

### Second Embodiment.

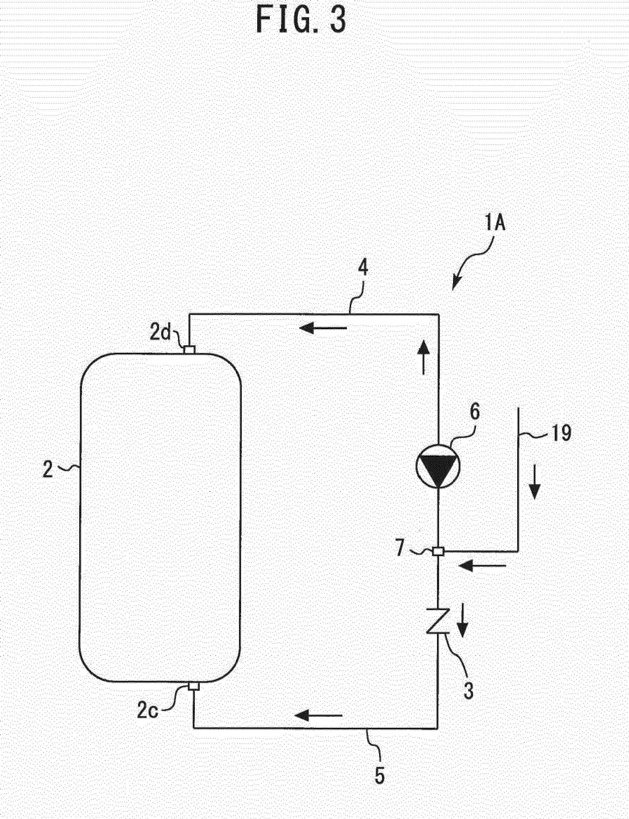

Next, a second embodiment is described with reference to Fig. 3. The differences from the first embodiment described above are mainly described, and the description of the same parts or corresponding parts are simplified or omitted. Fig. 3 is a view illustrating a heat storage device 1A of the second embodiment. In Fig. 3, the illustration of some devices included in the heat storage device 1A is omitted as in Fig. 2.

The heat storage device 1A of the second embodiment illustrated in Fig. 3 does not include the inverted U-shaped flow path 18. A filling operation of the second embodiment is described below. The direction in which the heating medium flows in the filling operation is indicated by the arrows in Fig. 3. The filling operation is performed as follows. The external supply source is connected to the filler tube 19 communicating with the filler port 7. The heating medium supplied from the supply source is injected into the first flow path 4 through the filler tube 19 and the filler port 7. The injected heating medium can flow into the heat storage tank 2 from an inlet 2c in the lower portion of the heat storage tank 2 through the check valve 3 and the second flow path 5. The injected heating medium can also flow in the direction toward the pump 6 and an outlet 2d in the upper portion of the heat storage tank 2 from the filler port 7 through the first flow path 4. As a result, the air in the first flow path 4 and the pump 6 can also be efficiently removed.

If the filler port 7 is provided in the second flow path 5, the following result is obtained. The injected heating medium cannot flow into the first flow path 4 due to the check valve 3. As a result, air tends to remain in the first flow path 4 and the pump 6. That is, the air in the closed circuit cannot be efficiently removed. Meanwhile, in this embodiment, the filler port 7 is provided in the first flow path 4, and hence the air in the closed circuit can be efficiently removed.

### Third Embodiment.

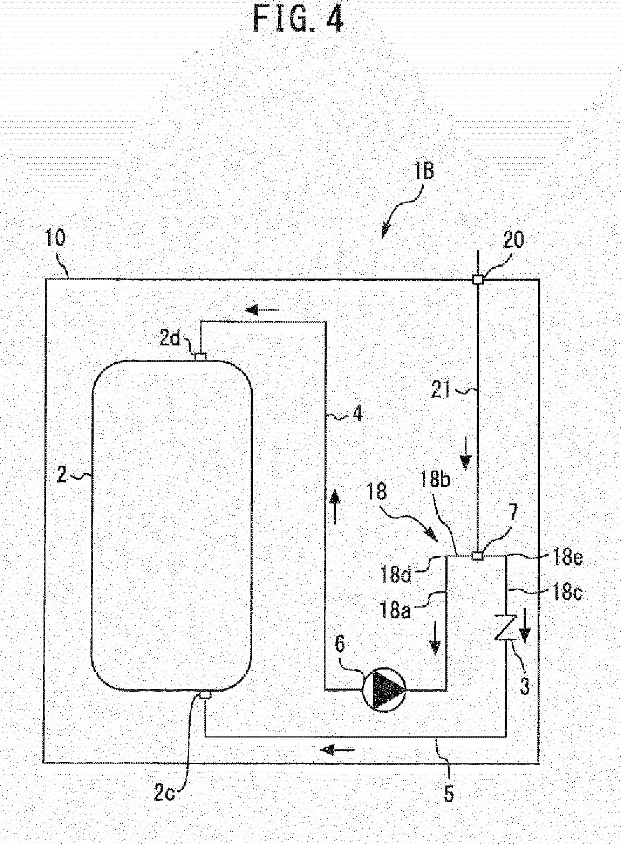

Next, a third embodiment is described with reference to Fig. 4. The differences from the first embodiment described above are mainly described, and the description of the same parts or corresponding parts are simplified or omitted. Fig. 4 is a view illustrating a heat storage device 1B of the third embodiment. In Fig. 4, the illustration of some devices included in the heat storage device 1B is omitted as in Fig. 2.

The heat storage device 1B of the third embodiment illustrated in Fig. 4 includes a second filler port 20 provided in the housing 10. The heat storage device 1B includes a filler tube 21 instead of the filler tube 19 of the first embodiment. The filler tube 21 connects the filler port 7 to the second filler port 20. The second filler port 20 is provided in the upper portion of the housing 10.

A filling operation of the third embodiment is described below. The direction in which the heating medium flows in the filling operation is indicated by the arrows in Fig. 4. The filling operation is performed as follows. The external supply source is connected to the second filler port 20. The heating medium supplied from the supply source is injected into the first flow path 4 through the second filler port 20, the filler tube 21, and the filler port 7. The flow of the heating medium thereafter is the same as that in the first embodiment, and hence description thereof is omitted.

In this embodiment, the following effect can be further obtained in addition to the same effects as the first embodiment. The supply source of the heating medium can be connected to the second filler port 20 from the outside of the housing 10 in the filling operation. Therefore, there is no need to remove a part of the housing 10 or open the housing 10 in the filling operation, and it is easy to work. There is a low possibility of air remaining in the filling operation because the second filler port 20 is provided in the upper portion of the housing 10, and hence the air in the closed circuit can be efficiently removed.

After the filling operation has completed, sealing is performed so that the heating medium does not leak from the filler port 7. The filler port 7 may include a valve (not shown) that automatically closes. The second filler port 20 may be closed instead of closing the filler port 7. The second filler port 20 may include a valve (not shown) that automatically closes. The filler tube 21 may include a valve (not shown).

### Fourth Embodiment.

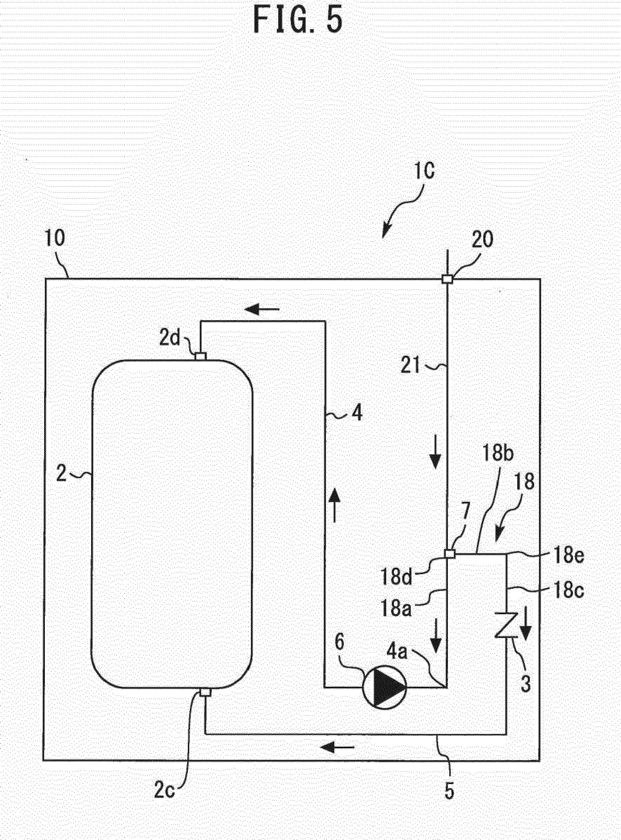

Next, a fourth embodiment is described with reference to Fig. 5. The differences from the first embodiment described above are mainly described, and the description of the same parts or corresponding parts are simplified or omitted. Fig. 5 is a view illustrating a heat storage device 1C of the fourth embodiment. In Fig. 5, the illustration of some devices included in the heat storage device 1C is omitted as in Fig. 2.

The heat storage device 1C of the fourth embodiment illustrated in Fig. 5 includes the inverted U-shaped flow path 18. The inverted U-shaped flow path 18 includes the first vertical portion 18a, the top portion 18b, the second vertical portion 18c, the first bend portion 18d, and the second bend portion 18e. The first vertical portion 18a and the second vertical portion 18c extend along the vertical direction. The top portion 18b extends along the horizontal direction. The first bend portion 18d is a bend portion between the upper end of the first vertical portion 18a and one end of the top portion 18b. The second bend portion 18e is a bend portion between the upper end of the second vertical portion 18c and the other end of the top portion 18b. The filler port 7 is provided in the first bend portion 18d. A bend portion 4a is provided between the lower end of the first vertical portion 18a and a discharge outlet of the pump 6. The filler port 7 is provided vertically above the bend portion 4a.

In the fourth embodiment, the following effects can be further obtained in the filling operation in addition to the same effects as the third embodiment. When a bend portion in the flow path is filled with the heating medium, there is a fear that air is collected in the bend portion. In the third embodiment, the heating medium entering from the filler port 7 flows into the first vertical portion 18a through the first bend portion 18d. Meanwhile, in the fourth embodiment, the heating medium is directly injected into the first bend portion 18d by providing the filler port 7 in the first bend portion 18d. As a result, the air in the first bend portion 18d can be removed more efficiently. Further, in this embodiment, the air in the bend portion 4a can be removed more efficiently by providing the filler port 7 vertically above the bend portion 4a.

The position of the filler port 7 may be in the second bend portion 18e instead of in the first bend portion 18d. Effects similar to those as above can be obtained also in that case.

### Fifth Embodiment.

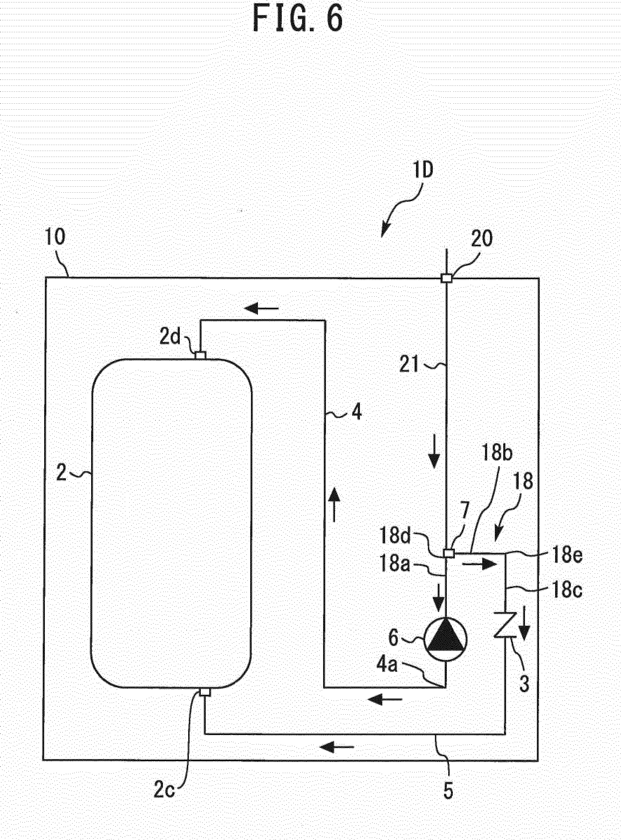

Next, a fifth embodiment is described with reference to Fig. 6. The differences from the fourth embodiment described above are mainly described, and the description of the same parts or corresponding parts are simplified or omitted. Fig. 6 is a view illustrating a heat storage device ID of the fifth embodiment. In Fig. 6, the illustration of some devices included in the heat storage device ID is omitted as in Fig. 2.

As illustrated in Fig. 6, in the heat storage device ID of the fifth embodiment, the position of the pump 6 is different from that of the fourth embodiment. The pump 6 is connected to a place in the middle of the first vertical portion 18a of the inverted U-shaped flow path 18.

In general, it may take time to remove the air in the pump 6 in the filling operation. In the fifth embodiment, the heating medium easily enters the pump 6 by connecting the pump 6 to a place in the middle of the first vertical portion 18a, and hence the air in the pump 6 can be removed more efficiently. In addition, in the fifth embodiment, the same effects as the fourth embodiment can be obtained.

The pump 6 may also be connected to a place in the middle of the first vertical portion 18a of the inverted U-shaped flow path 18 in the first embodiment and the third embodiment. Effects similar to that as above can be obtained also in that case.

### Sixth Embodiment.

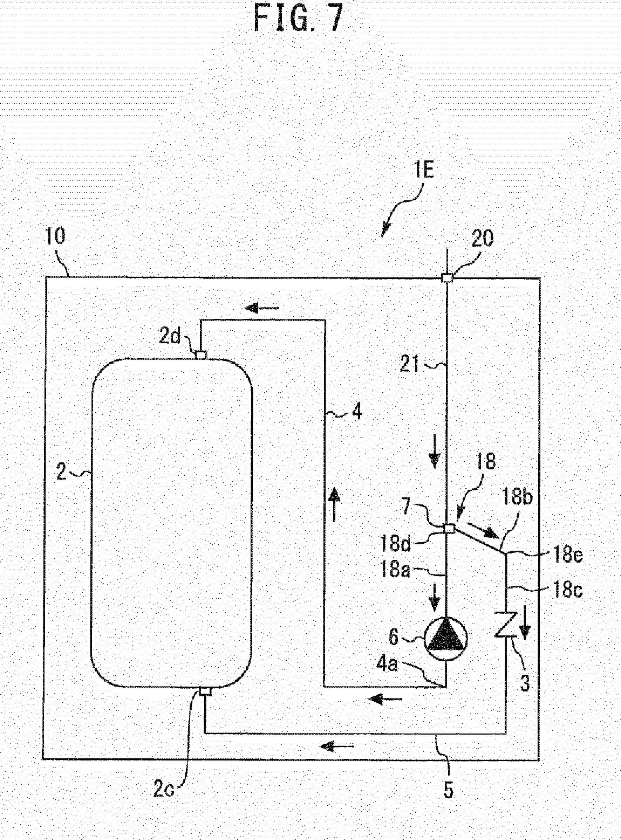

Next, a sixth embodiment is described with reference to Fig. 7. The differences from the fifth embodiment described above are mainly described, and the description of the same parts or corresponding parts are simplified or omitted. Fig. 7 is a view illustrating a heat storage device IE of the sixth embodiment. In Fig. 7, the illustration of some devices included in the heat storage device IE is omitted as in Fig. 2.

As illustrated in Fig. 7, the heat storage device IE of the sixth embodiment includes the inverted U-shaped flow path 18. The inverted U-shaped flow path 18 includes the first vertical portion 18a, the top portion 18b, the second vertical portion 18c, the first bend portion 18d, and the second bend portion 18e. The first vertical portion 18a and the second vertical portion 18c extend along the vertical direction. The first bend portion 18d is a bend portion between the upper end of the first vertical portion 18a and one end of the top portion 18b. The second bend portion 18e is a bend portion between the upper end of the second vertical portion 18c and the other end of the top portion 18b. The filler port 7 is provided in the first bend portion 18d. The top portion 18b is inclined downward from the filler port 7 to the second bend portion 18e. The first bend portion 18d corresponds to the uppermost portion of the inverted U-shaped flow path 18. The bend portion 4a is provided between the lower end of the first vertical portion 18a and the discharge outlet of the pump 6. The filler port 7 is provided vertically above the bend portion 4a.

In the sixth embodiment, the following effect can be further obtained in the filling operation in addition to the same effects as the fifth embodiment. The air collected in the second bend portion 18e is guided to the filler port 7 due to buoyancy. As a result, the air in the second bend portion 18e can be removed more efficiently.

### [Reference Signs List]

- 1, 1A, 1B, 1C, 1D, 1E: Heat storage device
- 2: Heat storage tank
- 2a: Inlet
- 2b: Outlet
- 2c: Inlet
- 2d: Outlet
- 3: Check valve
- 4: First flow path
- 4a: Bend portion
- 5: Second flow path
- 6: Pump
- 7: Filler port
- 8: Heat exchanger
- 9: Pump
- 10: Housing
- 11: Heat pump device
- 12, 13: Pipe
- 14: Water supply pipe
- 15: Hot water supply pipe
- 16, 17: Air vent valve
- 18: Inverted U-shaped flow path
- 18a: First vertical portion
- 18b: Top portion
- 18c: Second vertical portion
- 18d: First bend portion
- 18e: Second bend portion
- 19: Filler tube
- 20: Second filler port
- 21: Filler tube

## Claims

1. A heat storage device (1; 1A; 1B; 1C; 1D; 1E), comprising:
a heat storage tank (2) having an inlet (2c) and an outlet (2d), and configured to store a liquid heating medium;
a check valve (3) having an inlet and an outlet;
a first flow path (4) configured to connect the outlet (2d) of the heat storage tank (2) to the inlet of the check valve (3);
a second flow path (5) configured to connect the outlet of the check valve (3) to the inlet (2c) of the heat storage tank (2);
a pump (6) provided in the first flow path (4) and configured to transfer the heating medium; **characterized by**
a filler port (7) provided in the first flow path (4), wherein the heat storage device (1;1A;1B;1C;1D;1E) is configured to, when a closed circuit including the heat storage tank (2), the check valve (3), the first flow path (4), the second flow path (5), and the pump (6) is filled with the heating medium, the heating medium being supplied from an external supply source injected into the first flow path (4) through the filler port (7) such that the injected heating medium flows into the heat storage tank (2) from the inlet (2c) in the lower portion of the heat storage tank (2) through the check valve (3) and the second flow path (5), and also in the direction toward the pump (6) and the outlet (2d) in the upper portion of the heat storage tank (2) from the filler port (7) through the first flow path (4),
and wherein the closed circuit corresponds to a circuit in which the heating medium exiting the outlet (2d) of the heat storage tank (2) circulates so as to flow into the inlet (2c) of the heat storage tank (2) after passing through the first flow path (4), the check valve (3), and the second flow path (5).

2. The heat storage device (1; 1B; 1C; 1D; 1E) according to claim 1, further comprising an inverted U-shaped flow path (18), wherein
the filler port (7) is provided in an upper portion of the inverted U-shaped flow path (18).

3. The heat storage device (1C; 1D; 1E) according to claim 2, wherein:
the inverted U-shaped flow path (18) includes a vertical portion (18a), a top portion (18b), and a bend portion (18d) between the vertical portion (18a) and the top portion (18b); and
the filler port (7) is provided in the bend portion (18d).

4. The heat storage device (1D; 1E) according to claim 2 or 3, wherein:
the inverted U-shaped flow path (18) includes a vertical portion (18a); and
the pump (6) is provided in the vertical portion (18a).

5. The heat storage device (1; 1B; 1C; 1D; 1E) according to any one of claims 2 to 4, wherein the filler port (7) is provided in an uppermost portion of the inverted U-shaped flow path (18).

6. The heat storage device (1B; 1C; 1D; 1E) according to any one of claims 1 to 5, further comprising:
a housing (10) configured to accommodate the heat storage tank (2), the check valve (3), the first flow path (4), the second flow path (5), and the pump (6);
a second filler port (20) provided in the housing (10); and
a filler tube (21) configured to connect the filler port (7) to the second filler port (20).

7. The heat storage device (1) according to any one of claims 1 to 6, further comprising air removing means (16, 17) configured to remove air in the closed circuit.

## Patentansprüche

1. Wärmespeichereinrichtung (1; 1A; 1B; 1C; 1D; 1E), umfassend:
einen Wärmespeichertank (2), der einen Einlass (2c) und einen Auslass (2d) aufweist und eingerichtet ist, ein flüssiges Erwärmungsmedium zu speichern;
ein Rückschlagventil (3), aufweisend einen Einlass und einen Auslass;
einen ersten Strömungspfad (4), der eingerichtet ist, den Auslass (2d) des Wärmespeichertanks (2) mit dem Einlass des Rückschlagventils (3) zu verbinden;
einen zweiten Strömungspfad (5), der eingerichtet ist, den Auslass des Rückschlagventils (3) mit dem Einlass (2c) des Wärmespeichertanks (2) zu verbinden;
eine Pumpe (6), die in dem ersten Strömungspfad (4) bereitgestellt ist und eingerichtet ist, das Erwärmungsmedium weiterzuleiten;
**gekennzeichnet durch**:
eine Einfüllöffnung (7), die in dem ersten Strömungspfad (4) bereitgestellt ist, wobei
die Wärmespeichereinrichtung (1; 1A; 1B; 1C; 1D, 1E) eingerichtet ist, wenn ein geschlossener Kreislauf, aufweisend den Wärmespeichertank (2), das Rückschlagventil (3), den ersten Strömungspfad (4), den zweiten Strömungspfad (5) und die Pumpe (6), mit dem Erwärmungsmedium gefüllt wird, das von einer externen Versorgungsquelle zugeführte Erwärmungsmedium durch die Einfüllöffnung (7) in den ersten Strömungspfad (4) eingespritzt ist, so dass das eingespritzte Erwärmungsmedium von dem Einlass (2c) im dem unteren Abschnitt des Wärmespeichertanks (2) durch das Rückschlagventil (3) und den zweiten Strömungspfad (5) in den Wärmespeichertank (2) und außerdem in Richtung zur Pumpe (6) und den Auslass (2d) in dem oberen Abschnitt des Wärmespeichertanks (2) von der Einfüllöffnung (7) durch den ersten Strömungspfad (4) strömt,
und wobei der geschlossene Kreislauf einem Kreislauf entspricht, in dem das aus dem Auslass (2d) des Wärmespeichertanks (2) austretende Erwärmungsmedium zirkuliert, um nach Durchlaufen des ersten Strömungspfades (4), des Rückschlagventils (3) und des zweiten Strömungspfades (5) in den Einlass (2c) des Wärmespeichertanks (2) zu strömen.

2. Wärmespeichereinrichtung (1; 1B; 1C; 1D; 1E) nach Anspruch 1, ferner umfassend einen umgekehrt U-förmigen Strömungspfad (18), wobei:
die Einfüllöffnung (7) in einem oberen Abschnitt des umgekehrt U-förmigen Strömungspfades (18) bereitgestellt ist.

3. Wärmespeichereinrichtung (1C; 1D; 1E) nach Anspruch 2, wobei:
der umgekehrt U-förmige Strömungspfad (18) einen vertikalen Abschnitt (18a), einen oberen Abschnitt (18b) und einen gebogenen Abschnitt (18d) zwischen dem vertikalen Abschnitt (18a) und dem oberen Abschnitt (18b) aufweist; und
die Einfüllöffnung (7) im gebogenen Abschnitt (18d) bereitgestellt ist.

4. Wärmespeichereinrichtung (1D; 1E) nach Anspruch 2 oder 3, wobei:
der umgekehrt U-förmige Strömungspfad (18) einen vertikalen Abschnitt (18a) aufweist; und
die Pumpe (6) in dem vertikalen Abschnitt (18a) bereitgestellt ist.

5. Wärmespeichereinrichtung (1; 1B; 1C; 1D; 1E) nach einem der Ansprüche 2 bis 4, wobei die Einfüllöffnung (7) in einem obersten Abschnitt des umgekehrt-U-förmigen Strömungspfades (18) bereitgestellt ist.

6. Wärmespeichereinrichtung (1B; 1C; 1D; 1E) nach einem der Ansprüche 1 bis 5, ferner umfassend:
ein Gehäuse (10), das eingerichtet ist, den Wärmespeichertank (2), das Rückschlagventil (3), den ersten Strömungspfad (4), den zweiten Strömungspfad (5) und die Pumpe (6) aufzunehmen;
eine zweite Einfüllöffnung (20), die in dem Gehäuse (10) bereitgestellt ist; und
eine Einfüllleitung (21), die eingerichtet ist, die Einfüllöffnung (7) mit der zweiten Einfüllöffnung (20) zu verbinden.

7. Wärmespeichereinrichtung (1) nach einem der Ansprüche 1 bis 6, ferner umfassend ein Luftentfernungsmittel (16, 17), das eingerichtet ist, Luft in dem geschlossenen Kreislauf zu entfernen.

## Revendications

1. Dispositif de stockage de chaleur (1 ; 1A ; 1B ; 1C ; 1D ; 1E), comprenant :
une cuve de stockage de chaleur (2) ayant une admission (2c) et une évacuation (2d), et configurée pour stocker un milieu chauffant liquide ;
un clapet anti-retour (3) ayant une admission et une évacuation ;
un premier trajet d'écoulement (4) configuré pour relier l'évacuation (2d) de la cuve de stockage de chaleur (2) à l'admission du clapet anti-retour (3) ;
un second trajet d'écoulement (5) configuré pour relier l'évacuation du clapet anti-retour (3) à l'admission (2c) de la cuve de stockage de chaleur (2) ;
une pompe (6) prévue sur le premier trajet d'écoulement (4) et configurée pour transférer le milieu chauffant ;
**caractérisé par**
un orifice de remplissage (7) prévu sur le premier trajet d'écoulement (4), dans lequel
le dispositif de stockage de chaleur (1 ; 1A ; 1B ; 1C ; 1D ; 1E) est configuré, lorsqu'un circuit fermé comprenant la cuve de stockage de chaleur (2), le clapet anti-retour (3), le premier trajet d'écoulement (4), le second trajet d'écoulement (5) et la pompe (6) est rempli avec le milieu chauffant, pour injecter le milieu chauffant fourni par une source d'alimentation externe dans le premier trajet d'écoulement (4) par le biais de l'orifice de remplissage (7) de sorte que le milieu chauffant injecté circule dans la cuve de stockage de chaleur (2) depuis l'admission (2c) dans la partie inférieure de la cuve de stockage de chaleur (2), à travers le clapet anti-retour (3) et le second trajet d'écoulement (5), et également en direction de la pompe (6) et de l'évacuation (2d) dans la partie supérieure de la cuve de stockage de chaleur (2), depuis l'orifice de remplissage (7), à travers le premier trajet d'écoulement (4),
et dans lequel le circuit fermé correspond à un circuit dans lequel le milieu chauffant qui sort de l'évacuation (2d) de la cuve de stockage de chaleur (2) circule de façon à s'écouler dans l'admission (2c) de la cuve de stockage de chaleur (2) après être passé par le premier trajet d'écoulement (4), le clapet anti-retour (3) et le second trajet d'écoulement (5).

2. Dispositif de stockage de chaleur (1; 1B ; 1C; 1D; 1E) selon la revendication 1, comprenant en outre un trajet d'écoulement en forme de U inversé (18), dans lequel
l'orifice de remplissage (7) est prévu dans une partie supérieure du trajet d'écoulement en forme de U inversé (18).

3. Dispositif de stockage de chaleur (1C ; 1D ; 1E) selon la revendication 2, dans lequel :
le trajet d'écoulement en forme de U inversé (18) comprend une partie verticale (18a), une partie supérieure (18b), et une partie coudée (18d) entre la partie verticale (18a) et la partie supérieure (18b) ; et
l'orifice de remplissage (7) est prévu dans la partie coudée (18d).

4. Dispositif de stockage de chaleur (1D ; 1E) selon la revendication 2 ou 3, dans lequel :
le trajet d'écoulement en forme de U inversé (18) comprend une partie verticale (18a) ; et
la pompe (6) est prévue dans la partie verticale (18a).

5. Dispositif de stockage de chaleur (1; 1B; 1C; 1D; 1E) selon l'une quelconque des revendications 2 à 4, dans lequel l'orifice de remplissage (7) est prévu dans une partie la plus haute du trajet d'écoulement en forme de U inversé (18).

6. Dispositif de stockage de chaleur (1B; 1C ; 1D; 1E) selon l'une quelconque des revendications 1 à 5, comprenant en outre :
une enceinte (10) configurée pour contenir la cuve de stockage de chaleur (2), le clapet anti-retour (3), le premier trajet d'écoulement (4), le second trajet d'écoulement (5) et la pompe (6) ;
un second orifice de remplissage (20) prévu dans l'enceinte (10) ; et
un tube de remplissage (21) configuré pour relier l'orifice de remplissage (7) au second orifice de remplissage (20).

7. Dispositif de stockage de chaleur (1) selon l'une quelconque des revendications 1 à 6, comprenant en outre des moyens de suppression d'air (16, 17) configurés pour supprimer l'air dans le circuit fermé.
